Europäisches Patentamt

(19) European Patent Office

Office européen des brevets

(11) Publication number: **0 144 113**
**B1**

(12) **EUROPEAN PATENT SPECIFICATION**

(45) Date of publication of patent specification: 02.05.90

(51) Int. Cl.⁵: **G 01 J 3/46**

(21) Application number: **84301287.3**

(22) Date of filing: **28.02.84**

(54) **Method of measuring color difference of dyestuffs.**

(30) Priority: **01.12.83 JP 227189/83**

(43) Date of publication of application:
**12.06.85 Bulletin 85/24**

(45) Publication of the grant of the patent:
**02.05.90 Bulletin 90/18**

(84) Designated Contracting States:
**CH DE GB LI**

(56) References cited:
**EP-A- 128 633**
**GB-A-1 109 642**
**GB-A-1 229 307**

**REPORT ON PROGRESS IN PHYSICS, vol. 41, no. 4, April 1978, pages 469-510, GB; A.R. ROBERTSON "Colorimetry"**
**Principles of Color Technology, F.W. Billmeyer and M. Salzmann (1981), pages 149-152**

(73) Proprietor: **SUMITOMO CHEMICAL COMPANY, LIMITED**
**Kitahama 4-chome 5-33**
**Chuo-ku Osaka 541 (JP)**

(72) Inventor: **Ohashi, Hiromu**
**39-8, Handaijicho**
**Sakai-shi (JP)**
Inventor: **Suzuka, Masakazu**
**1-2-217, Kuwatacho-2-chome**
**Ibaraki-shi (JP)**
Inventor: **Murata, Yukio**
**2-2, 2-Bancho, Hiyoshidai**
**Takatsuki-shi (JP)**
Inventor: **Fujitsuka, Nobuyoshi**
**12-901, Mizuo-3-chome**
**Ibaraki-shi (JP)**

(74) Representative: **Harrison, David Christopher et al**
**MEWBURN ELLIS & CO 2/3 Cursitor Street**
**London EC4A 1BQ (GB)**

Courier Press, Leamington Spa, England.

**Description**

This invention relates to a method for measuring the colour difference between a sample and a standard dyestuff. More particularly, it relates to a method for measuring colour difference which is useful for the quality control of dyestuffs in the dye manufacturing industry.

The conventional quality control of dyes in a dye manufacturing works is performed by dyeing an appropriate material with freshly manufactured dye and, in parallel, with a reference dye selected as standard, measuring the quality difference between the dyed materials. When such simultaneous dyeing is carried out by using equal amounts of a dye selected as standard (hereinafter referred to as standard dye) and a dye to be measured for the colour difference (hereinafter referred to as sample dye), there occurs a difference in the depth of colour between each dyed material depending upon the purity, that is, the colouring matter content of each dye. In order to correct the colour difference resulting from the difference in the depth of colour, the concentration of dye in the bath is adjusted so that the depth of colour of the dyeings may be equalized. The colour properties of a dye are evaluated based on the colour difference between the dyeings obtained by use of the adjusted bath. The colour difference is resolvable into a difference in hue such as, for example, inclination to red or inclination to blue, and a difference in so-called brightness which is dependent on the purity of colour. The evaluation of the colour of a dye by human visual judgement is usually done in terms of three values including the difference in hue, the difference in brightness, and, in addition, the difference in dyeing strength which is the percentage ratio of the quantities of dyes or concentrations of dyebaths necessary for the dyeings of equal colour depth. In the conventional method of evaluating the colour difference of a sample dye in comparison with a standard dye, it is usual practice to carry out a sequence of procedural steps comprising preparation of yarn or cloth, preparation of dye solution, preparation of dyebath, dyeing, after treatment, washing and drying simultaneously for both dyes and then to compare the dyeings with each other. Visual and instrumental methods of comparison are described by Billmeyer and Saltzman in Principles of Colour Technology, John Wiley & Sons; New York, 2nd Edition, 1981, at pages 149—152. Since such a method consumes a great deal of time and man-power and, in addition, the precision of test is not satisfactory, there is a rising requirement for a method which is more economical, rapid, simple, and precise.

Reference is made to the applicants' own EP—A—0128633 which falls under the provisions of Art. 54(3) EPC. This document discloses a method of measuring the colour difference between a sample and a standard dye by testing the colour properties of both dyes, which method comprises the stages of

(A) selecting respective samples of respective representative dyes and of a standard dye, the representative dyes having respective proportions of colouring matter each differing to some degree from one another and from the standard dye;

(B) for each of the representative and standard dye samples measuring the absorbance of each component thereof so as to construct an absorbance distribution curve for each said component per unit content thereof in the dye, which said measurement is carried out by the steps of

(i) separating each of the components present in the dye by chromatography,

(ii) determining the content of each separated component by quantitative analysis,

(iii) measuring the absorbance of each component separated so as to construct an absorbance distribution curve for each said component, and

(iv) from the results of (iii), calculating the absorbance of each component per unit content thereof in the dye and thereby constructing the said absorbance distribution curve thereof,

(C) for each of the representative dye samples, deriving a relationship between (1) the colour difference between that of a solution of the representative dye sample and that of a solution of the standard dye sample, and (2) the colour difference between that of a dyeing of the representative dye sample and that of a dyeing of the standard dye sample, the said relationship being derived by the steps of

(i) using the said absorbance distribution curves for the respective separated components per unit content thereof in the dye sample and the said quantitative analysis, calculating an absorbance distribution curve for each of the solutions of the representative and standard dye samples comprising respective mixtures of components,

(ii) selecting, as a colour property unaffected by variation in solution concentration, complementary chromaticity coordinates for each of the representative and standard dye samples,

(iii) from the chromaticity coordinates, calculating complementary tristimulus values QX, QY, QZ for each of the solutions of the representative and standard dye samples,

(iv) for the solution of the standard dye sample, transforming the absorbance distribution curve thereof obtained in (i) into a transmittance curve to obtain tristimulus values X, Y, Z,

(v) transforming the tristimulus values X, Y, Z into a uniform scale colorimetric system,

(vi) from the colorimetric system, deriving a chromaticity diagram and calculating chromaticity coordinates representing values of (a) hue and (b) brightness or saturation each representing a unit change from those of the solution of the standard dye sample,

(vii) comparing the chromaticity coordinates of the solution of the representative dye sample obtained in (iii) above with those of the solution of the standard dye sample,

(viii) from the above comparison, determining the hue and saturation or brightness difference between those of the solutions of (a) the representative dye sample and (b) the standard dye sample,

EP 0 144 113 B1

(ix) measuring the colour difference between that of a dyeing of the representative dye sample and that of the standard dye sample, and

(x) from the results of (viii) and (ix), deriving the said relationship between (1) the colour difference between that of a solution of the representative dye sample and that of a solution of the standard dye sample and (2) the colour difference between that of a dyeing of the representative dye sample and that of a dyeing of the standard dye sample, the said relationship thereby being in terms of hue and saturation or brightness,

(D) repeating each of the steps (B) and (C)(i)-(iii), (vii) and (viii), carried out above with the representative dye sample, but with a dye sample to be tested in place of the representative dye sample and thereby determining the colour difference between (a) that of a solution of the dye sample to be tested and (b) that of a solution of the standard dry sample, and

(E) from the results of (C) and (D), predicting the colour difference between (a) that of a dyeing of the dye sample to be tested and (b) that of a dyeing of the standard dye sample.

In a method in accordance with the present invention (accomplished after an extensive study of numerical data in an attempt to provide the above-mentioned requirements of economy, speed, simplicity and precision), the above stage (C) includes a step (ii') immediately subsequent to step (i) thereof, of setting the absorption distribution curve for the representative dye sample comprising a mixture of components to coincide with that of the standard dye sample using an optical density ratio between that of the representative dye sample and that of the standard dye sample.

Tristimulus values X, Y, Z are then directly obtained in a step (iii'), i.e. replacing the above-mentioned step (iii) of EP—A—0128633, for both of the representative dye sample and standard dye sample by transforming the respective absorption distribution curve of the standard dye sample and that, coinciding therewith, of the representative dye sample, and these tristimulus values X, Y, Z may then be transformed into a uniform scale colorimetric system from which the said relationship determined in step (x) above may be derived.

In the following description, for brevity, the difference between (a) the colour of the solution or dyeing of a sample of dye and (b) the colour of a solution or dyeing of a standard dye sample will be referred to as the "colour difference". In other words, "colour difference" (unless otherwise stated) refers to a colour difference relative to a standard dye sample.

Thus, the present invention provides a method for measuring the colour difference between a sample of a dye to be tested (hereinafter "sample dye") and a sample of a standard dye (hereinafter "standard dye") by testing the colour properties of both dyes, which comprises:

measuring the distribution curve of absorbance of each component of the dye by separating each of the components contained in the standard dye and in respective samples of respective representative dyes (hereinafter "representative samples") by chromatography, determining the content of each separated component by quantitative analysis, measuring a distribution curve of absorbance for each component separated, and calculating a distribution curve of absorbance per unit content for each component separated;

deriving a relationship between colour differences of dye solutions and colour differences of dyeings made with the standard dye and the representative samples by using the previously determined distribution curves of absorbance per unit content of the separated components and the contents determined by quantitative analysis of each separated component with respect to the standard dye and the representative samples, thereby to obtain the distribution curves of absorbance of a mixture with respect to the standard dye and the representative samples, setting the said distribution curves of absorbance of the representative samples obtained to coincide with that of the standard dye using optical density ratios between the standard dye and the representative samples, transforming the said distribution curve of absorbance of the standard dye obtained and the said coincident distribution curve of absorbance of the representative samples into transmittance curves to obtain tristimulus values X, Y, Z for both the standard dye and the representative sample, transforming the tristimulus values into a uniform colour scale colorimetric system and determining hue and saturation or brightness difference between the standard dye and representative samples in that colorimetric system, determining the colour difference between dyeings prepared with the standard dye and the representative samples in terms of hue and saturation or brightness, and deriving the relationship between the previously determined colour differences of the dye solution and the previously determined colour differences of the dyeings in terms of hue and saturation or brightness;

calculating the colour differences between standard dye and solutions of the sample dye in terms of hue and saturation or brightness, as previously described; and

predicting the colour differences of dyeings of the sample dye from the colour differences of the solution of the sample dye previously determined using the relationship derived above.

In the method of the invention, using a standard dye and two or more, preferably several, respective representative samples of respective dyes of the same family (in structure) as that of the standard dye (but differing from one another and from the standard dye in the proportional amounts of the colouring components), the relationship between the colour differences of dye solutions and the colour differences of dyeings is determined according to the following stages (2), (3) and (4); then the colour difference of the solution of a sample dye to be tested is determined according to the following stage (5); and the colour

3

difference of a dyeing of the sample dye is predicted according to the following stage (6) from said relationship and the colour difference of the sample dye solution. Stages of the procedure are carried out as follows:

(1) Each of the components contained in the respective representative samples and the standard dye is separated, collected separately by chromatography and quantitatively analyzed. Each separated component is measured for absorbance and an absorbance distribution curve (spectral absorption curve) is constructed. From this curve a curve of distribution of absorbance per unit content of each separated component is derived. At this stage, any correction, for example, for differences in dyeability between the various components, can be made by the use of a weighting factor relevant to the particular correction to be made.

(2-1) A colour mixing calculation is performed by using the curves of distribution of absorbance per unit content of the separated components obtained in (1) and the values determined by quantitative analysis, thereby to obtain a curve of distribution of absorbance of the dye component mixture for each of the standard dye and the respective representative samples. The correction by means of a weighting factor is made at this stage unless it has been made in (1).

(2-2) By using the respective optical density ratios between the standard dye and the respective representative samples, the curves of distribution of absorbance of the representative samples obtained in (2-1) are each set to coincide with that of the standard dye obtained in (2-1) and the curves of distribution of absorbance of the representative samples obtained above are transformed into transmittance curves to obtain tristimulus values X, Y, Z for both the standard dye and the representative samples. The tristimulus values are then transformed into a uniform colour scale colorimetric system.

The chromaticity difference and lightness difference in this colorimetric system are determined. The component of hue difference contained in the chromaticity difference is assumed to be the hue difference of the dye solution. The composite vector in the saturation difference contained in the lightness difference and the chromaticity difference is assumed to be the brightness difference of the dye solution. The foregoing operation is repeated on two or more, preferably several, representative samples different from one another in their proportions of colouring matter components.

(3) From the dyeings prepared with the standard dye and the representative samples of which the colour difference of solution has been determined above, the respective colour differences between a dyeing of the standard dye and respective dyeings of the representative samples are determined in terms of hue difference and saturation or brightness difference.

(4) The relationship between the colour differences of dye solutions determined in (2) and the colour differences of dyeings determined in (3) is determined in terms of hue difference and saturation or brightness difference.

(5) By using the standard dye and a sample of dye to be tested the colour difference of a solution of the sample dye is calculated in terms of hue difference and saturation or brightness difference, as described in (2).

(6) The colour difference of a dyeing of the sample dye is predicted from the colour difference of solution of the sample dye obtained in (5) and the relationship found in (4).

By using a method in accordance with the present invention (hereinafter "the present method"), it becomes possible to predict the colour difference of dyeings from the results of quantitative analysis for dye components without the need for a complicated dyeing test. The advantages of the present method may be summarized as follows:

(a) The exclusion of a series of procedures for the dyeing test resulting in speed-up and simplification of operation steps as well as saving in man-power and energy.

(b) The conventional method for the evaluation of colour difference by the dyeing test includes a number of factors which tend to decrease the precision of evaluation, such as differences in the type and shape of the material to be dyed, variation in the evaluation results caused by the variation, for example, in dyeing procedure and dyeing equipment, and visual judgement susceptible to variation amongst observers, whereas the precision is much improved in the present method by the preclusion of such factors.

(c) Since the colour difference of a sample dye is found precisely and speedily, the present method is applicable to the process control in the dye manufacture with accompanying pronounced economic advantages such as reduction of defective products and curtailment of the waiting time.

(d) The present method can be widely utilized in the developmental stage of novel dyestuffs, resulting in speed-up of research work.

(e) Requirement from the user of a dye for a change in hue can be quickly answered.

The method of this invention is described below in detail with reference to the accompanying drawings.

Fig. 1 is a flow chart of procedural stages of the present method.

Fig. 2 is a flow chart for the measurement of colour difference of a dye solution.

Fig. 3 is a curve of distribution of absorbance of a dye.

Fig. 4 is a curve of spectral transmittance of a dye.

Fig. 5 is a chromaticity diagram according to the CIE 1976 L*a*b* colorimetric system.

Fig. 6 is a liquid chromatogram of a dye in Example 1.

Fig. 7 is a graphical representation of a relationship between the colour differences of dye solutions and the colour differences of dyeings.

Fig. 8 is a liquid chromatogram of the dye in Example 2.

Fig. 9 is a drawing illustrating the construction of the absorbance measuring system using a spectrophotometer of the rapid scanning type.

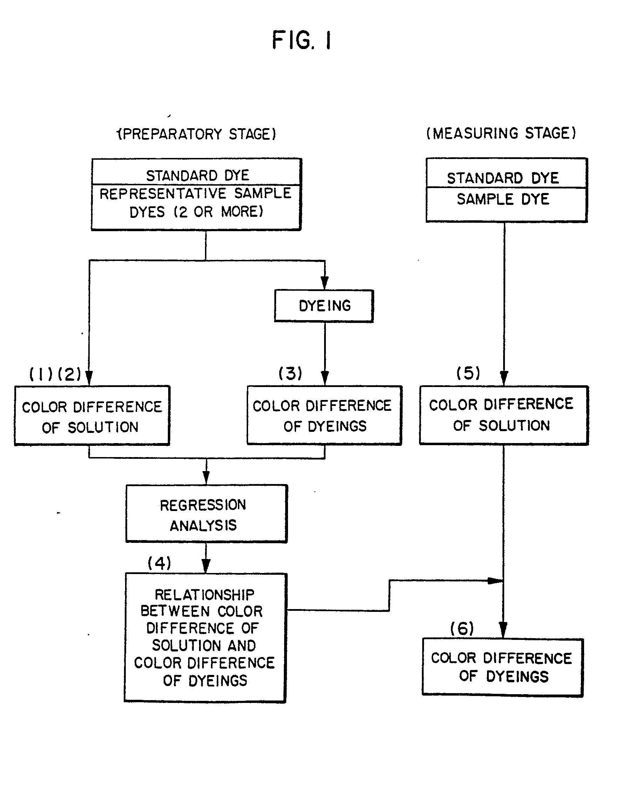

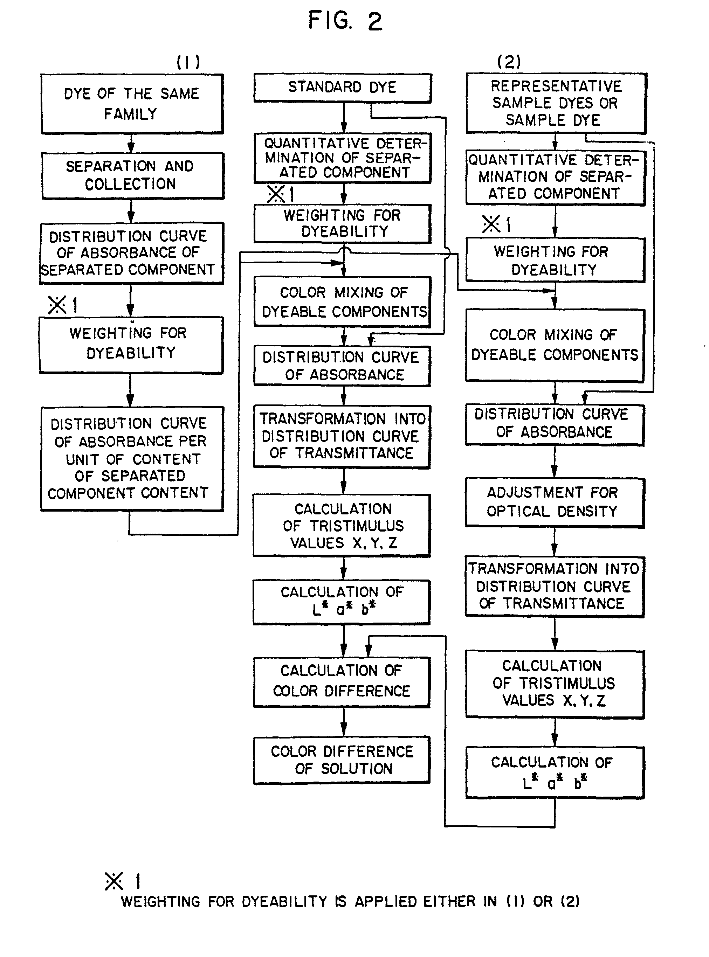

Figs. 1 and 2 are flow charts illustrating the present method.

Fig. 1 is a flow chart showing generally the various procedural stages and Fig. 2 is a flow chart for the measurement of colour difference of a dye solution. In both Figs. the encircled figure corresponds to the stage number described above.

In Fig. 2, reference (1) represents the stage in which colour properties (of solutions) of the components constituting a dye are determined. Reference (2) represents a stage in which the curves of distribution of absorbance of the mixtures of the colouring matter components contained in a dye are derived and the colour difference of dye solutions is determined by use of these curves of distribution of absorbance.

As to chromatographs which may be used in the present method, mention may be made of column chromatographs, paper chromatographs, and liquid chromatographs. Of these, a high performance liquid chromatograph is especially advantageous. The adjustment of measurements by weighting with respect to dyeability and other factors should be made in step (1) or (2-1).

A typical procedure of a method embodying the present invention in which a liquid chromatograph is used as a means of separation is described below in further detail with reference to the drawings:

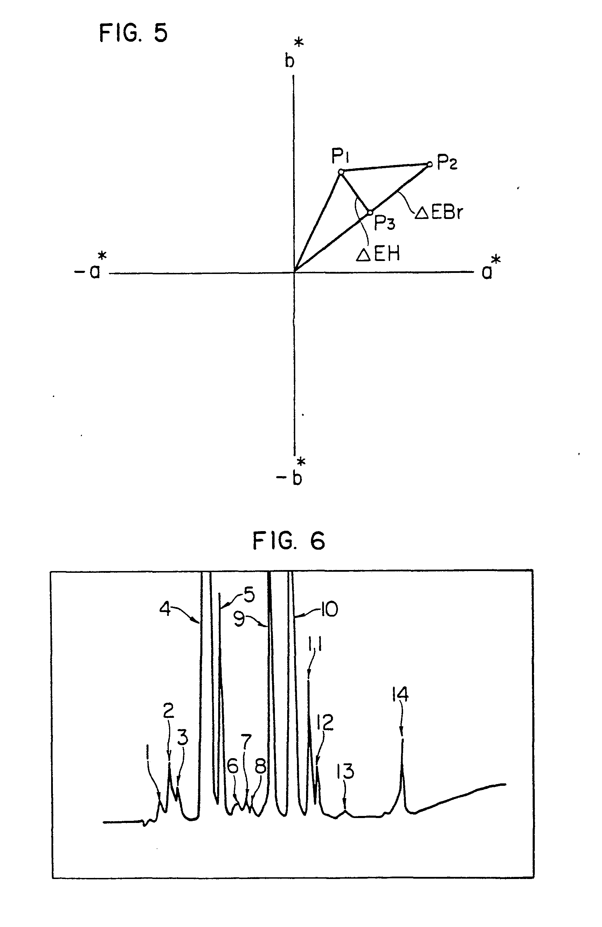

(1) For each of a standard dye and representative samples in which the dyes are of the same family, each component of the dye is separated and collected by high performance liquid chromatography. The absorbance of each separated component is measured and an absorbance distribution curve constructed. From this curve a curve of distribution of absorbance in the form of a colour property per unit content of each separated component is derived. An example for a red dye is shown in Fig. 6 which represents a liquid chromatogram obtained in separating each component contained in said dye. The absorbance in the visible spectrum range per unit content of each component content of the dye is as shown in Table 2 (given later).

(2) Next, a calculation for colour mixing is performed according to the following equations [1], using the results of quantitative analysis for each separated component, the absorbance per unit of content, and a correction factor for the dyeability (hereinafter referred to as the dyeing coefficient) of each separated component for each of the standard dye and the representative dye samples, thereby to obtain the absorbance for the mixtures of which each of the dyes is composed. The calculation can be carried out by means of a computer.

$$Dst, \lambda = \sum_{n=1}^{n=n} Dn\lambda pn, st \; Sn \left.\begin{array}{c} \\ \\ \\ \\ \\ \end{array}\right\} \quad [1]$$

$$Dsp, \lambda = \sum_{n=1}^{n=n} Dn\lambda pn, sp \; Sn$$

wherein st and sp refer to standard dye and representative samples, respectively, n is the number of separated individual components, pn is a value obtained by dividing the individual component content by the main component content and multiplying by 100 (hereinafter referred to as ratio of individual component to main component), each component being obtained by the method of peak area normalization, $Dn\lambda$ is a value obtained by dividing the absorbance of a separated individual component by pn, $\lambda$ being 200—800 nm, and Sn is the dyeing coefficient of the individual component.

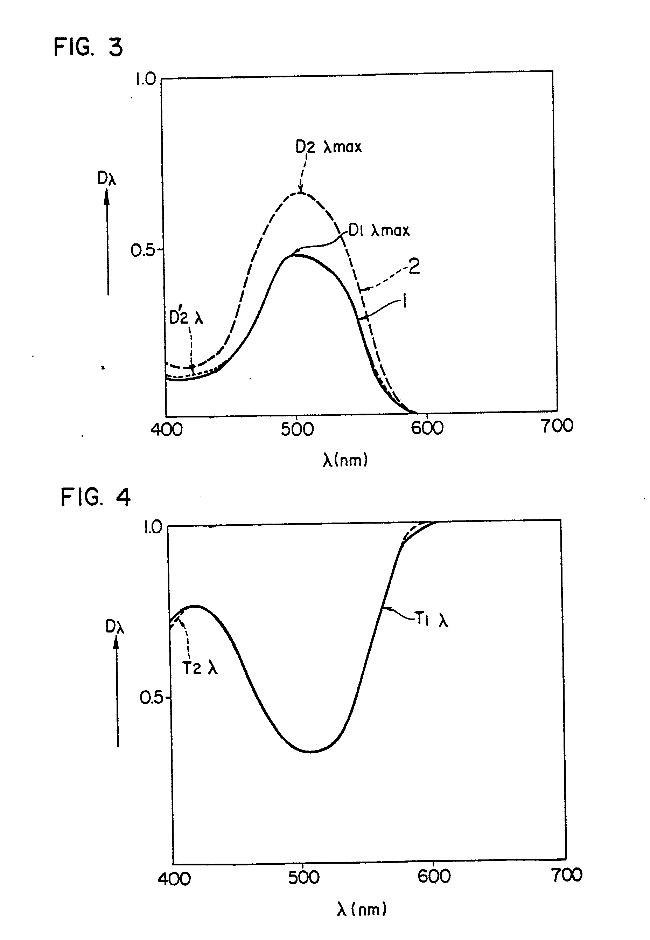

The absorbance distribution curve is then converted through the following equation [2] so that the optical density of the representative sample dye solution may become equal to that of the standard dye solution, thereby to preclude that portion of the colour difference which originated from the difference in depth of colour (Fig. 3).

$$D_2'\lambda = D_2\lambda \frac{D_1\lambda max}{D_2\lambda max} \quad [2]$$

wherein $D_1\lambda max$ is the maximum absorbance of standard dye 1, $D_2\lambda max$ is the maximum absorbance of representative sample dye 2, and $D_2'\lambda$ is the absorbance of representative sample dye adjusted to the identical optical density as that of the standard dye, $\lambda max$ being the wavelength of maximum absorbance.

There is an alternative method of adjustment from the viewpoint of visually perceptible depth of colour. In this method the adjustment is made on the basis of adjusted complementary tristimulus values which are obtained by adjusting the spectral absorbances in the visible spectral range by means of a weight factor so as to meet the human colour perception and integrating the spectral absorbances over the whole visible spectrum range. An example of the method is described below.

The complementary tristimulus values (X', Y', Z') to three primary colour perceptions are calculated by means of the following formulae [3]:

$$
\left.\begin{array}{l}
X' = \int P\lambda \bar{x}\lambda D\lambda d\lambda \\[2mm]
Y' = \int P\lambda \bar{y}\lambda D\lambda d\lambda \\[2mm]
Z' = \int P\lambda \bar{z}\lambda D\lambda d\lambda
\end{array}\right\} \qquad [3]
$$

$$
SQ = X' + Y' + Z' \qquad [4]
$$

SQ, which is called the total complementary tristimulus value, is calculated with respect to both the standard dye and the sample dye. For simplification, it is possible to substitute the maximum value among X', Y' and Z' for SQ. This method sometimes gives favourable results in the case of a dye having a nearly pure colour. The absorbance of a representative sample dye, $D_2'\lambda$, which is adjusted to the identical optical density is calculated according to the following equation [5]:

$$
D_2'\lambda = D_2\lambda \frac{SQ_1}{SQ_2} \qquad [5]
$$

wherein $SQ_1$ corresponds to SQ of the standard dye at predetermined optical density calculated by means of equation [4], and $SQ_2$ corresponds to SQ determined from the distribution curve of absorbance of the representative sample dye adjusted to the identical optical density.

The absorbance of the standard dye and that of the representative sample dye adjusted to the identical optical density are then converted into transmittance through the following equations [6] as shown in Fig. 4.

$$
\left.\begin{array}{l}
T_1\lambda = I/Exp\ (D_1\lambda /0.4343) \\[2mm]
T_2\lambda = 1/Exp\ (D_2'\lambda /0.4343)
\end{array}\right\} \qquad [6]
$$

wherein $T_1\lambda$ is the transmittance of the standard dye, $T_2\lambda$ is that of the representative sample dye adjusted to identical optical density, $D_1\lambda$ is the absorbance of the standard dye, and $D_2'\lambda$ is the absorbance of the representative sample dye adjusted to identical optical density.

The tristimulus values of the standard dye and the representative sample dye are calculated by means of the following equations [7]:

$$
\left.\begin{array}{l}
X = K\int P\lambda \bar{x}\lambda T\lambda d\lambda \\[2mm]
Y = K\int P\lambda \bar{y}\lambda T\lambda d\lambda \\[2mm]
Z = K\int P\lambda \bar{z}\lambda T\lambda d\lambda
\end{array}\right\} \qquad [7]
$$

$$
K = 100\int P\lambda \bar{y}\lambda d\lambda \qquad [8]
$$

wherein $\bar{x}\lambda$, $\bar{y}\lambda$ and $\bar{z}\lambda$ are spectral tristimulus values such as those described in CIE 1964 Supplementary Colorimetric System (Specification of colours in the visual field subtending 10° according to X, Y, Z colorimetric system) or in CIE 1931 Standard Colorimetric System (Specification of colours in the visual field subtending 2° according to X, Y, Z colorimetric system). $P\lambda$ is the spectral distribution of a standard illuminant such as any of those corresponding to the light sources generally used in colour evaluation, the most frequently used one being $D_{65}$. $T\lambda$ is the transmittance of the standard dye or representative sample dye, $\lambda$ being the wavelength. $d\lambda$ is the spectral wavelength interval for the integral calculation. A generally used interval is 10 or 20 nm, the latter interval being used herein. Since the absorbance at $\lambda$max is on the same basis, the calculated value of X, Y, Z correspond to the colour specification values when the optical density of the representative sample dye is adjusted to that of standard dye. These values are then

6

transformed into uniform colour scale system such as CIE 1976 (L*a*b*) colorimetric system recommended by CIE in 1976.

$$L^* = 116 \ (Y/Y_O)^{1/3} - 16$$
$$a^* = 500 \ [(X/X_O)^{1/3} - (Y/Y_O)^{1/3}] \qquad [9]$$
$$b^* = 200 \ [(Y/Y_O)^{1/3} - (Z/Z_O)^{1/3}]$$

When the standard illuminant is $D_{65}$ (visual field subtending 10°), the following results are obtained:

$$X_O = 94.811$$
$$Y_O = 100.0$$
$$Z_O = 107.334$$

The colour difference between that of the standard dye and that of the representative sample dye is derived from the above colorimetric system. The relation between the hue difference and the brightness difference in this colorimetric system is as shown in Fig. 5. In chromatic colours, the component of lightness difference contained in the brightness difference is so small that the latter can be replaced by saturation difference. In Fig. 5, $P_1$ is the chromaticity point of the standard dye, $P_2$ is that of the representative sample dye of adjusted optical density, and $P_3$ is a point at which the line, i.e. constant hue line, connecting between the origin (achromatic colour) and the point $P_2$ intersects the line passing through point $P_1$ and perpendicular to the constant hue line. The distance between $P_1$ and $P_3$ corresponds to the component of hue difference contained in the colour difference and the distance between $P_2$ and $P_3$ corresponds to the component of brightness difference in the colour difference. Since $P_2$ is the chromaticity point of the representative sample dye which has been adjusted to the same integrated optical density as that of the standard dye, there is no colour difference due to the difference in colour depth. Consequently, the two colour differences referred to above represent the hue difference and the brightness difference. $L^*$ is the coordinate axis perpendicular to the plane a* b* at the origin (achromatic colour). Therefore, the colour difference can be calculated approximately by the following equations (10):

$$\Delta E = \sqrt{(\Delta L^*)^2 + (\Delta a^*)^2 + (\Delta b^*)^2}$$
$$\Delta EBr = \sqrt{(\Delta L^*)^2 + \Delta[(a^*)^2 + (b^*)^2]} \qquad [10]$$
$$\Delta EH = \sqrt{(\Delta E)^2 - (\Delta EBr)^2}$$

wherein $\Delta E$ is the colour difference between two colours, $\Delta EH$ the hue difference, and $\Delta EBr$ the brightness difference.

The foregoing procedure is repeated on two or more, preferably several, representative samples having different ratios of colouring matter components, thereby to determine the colour difference of solution of each representative sample dye.

(3) A customary dyeing test is performed on the standard dye and the same representative samples as used above. The difference between the dyeing colour of each representative sample dye and that of the standard dye is measured in terms of hue difference and saturation or brightness difference.

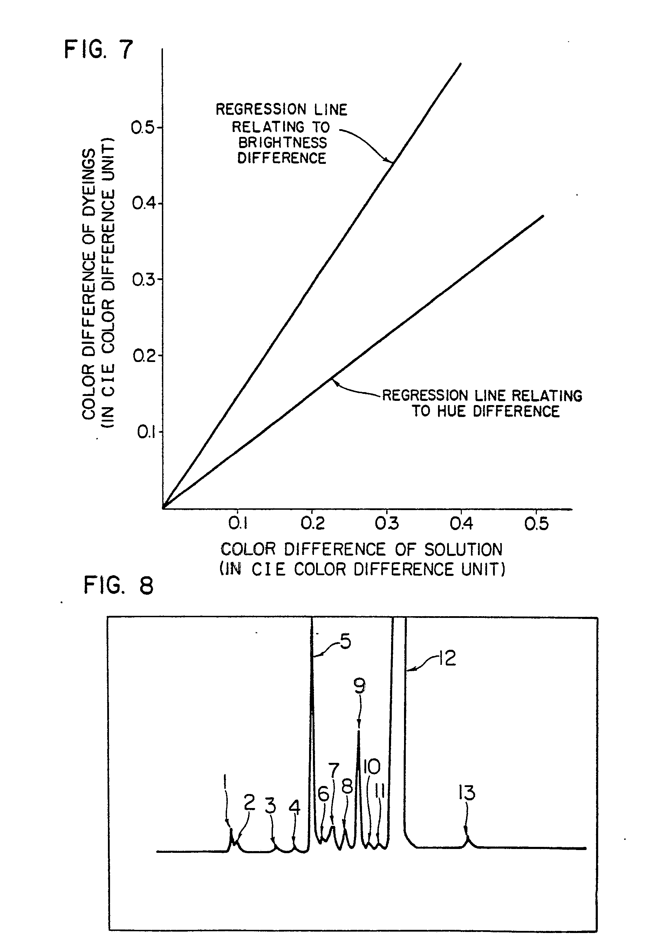

(4) The relation between the colour differences of dye solutions and the colour differences of dyeings is statistically determined in the form of a regression line (Fig. 7) for example.

(5) The colour difference between solutions of the standard dye and the sample dye respectively is determined in the same manner as in (2).

(6) It is thus possible to predict the colour difference of dyeings in terms of hue difference and brightness difference from the colour difference of dye solution of the sample dye obtained in (5) by referring to the relation established in (4).

The invention is illustrated below with reference to Examples, in which all parts are by weight.

Example 1

Measurement of Colour Difference of Representative Sample Solution

Colour Index (C.I.) Reactive Red 111 is separated into individual components by means of a high performance liquid chromatograph under the following conditions of separation. The dye solution for injection is prepared by dissolving 0.12 part of the dye in water and making up to 100 parts with water.

Conditions for high performance liquid chromatographic separation:

Column: Lichrosorb RP$_{18}$ (Sumika Analytical Center Co.)

Mobile phase:

Liquid A: 0.05% DBAP in water.

Liquid B: 0.05% DBAP in methanol.

Elution: Gradient method.

The concentration of liquid B is increased from the starting concentration of 30% up to 40% after 20 minutes, then to 100% after another 20 minutes.

Flow rate: 1 ml/minute.

Monitoring wavelength: 512 nm.

Sample volume: 5 μl.

The content of each component is determined by the method of peak area normalization and the ratio of each separated component to the main component is calculated (Table 1).

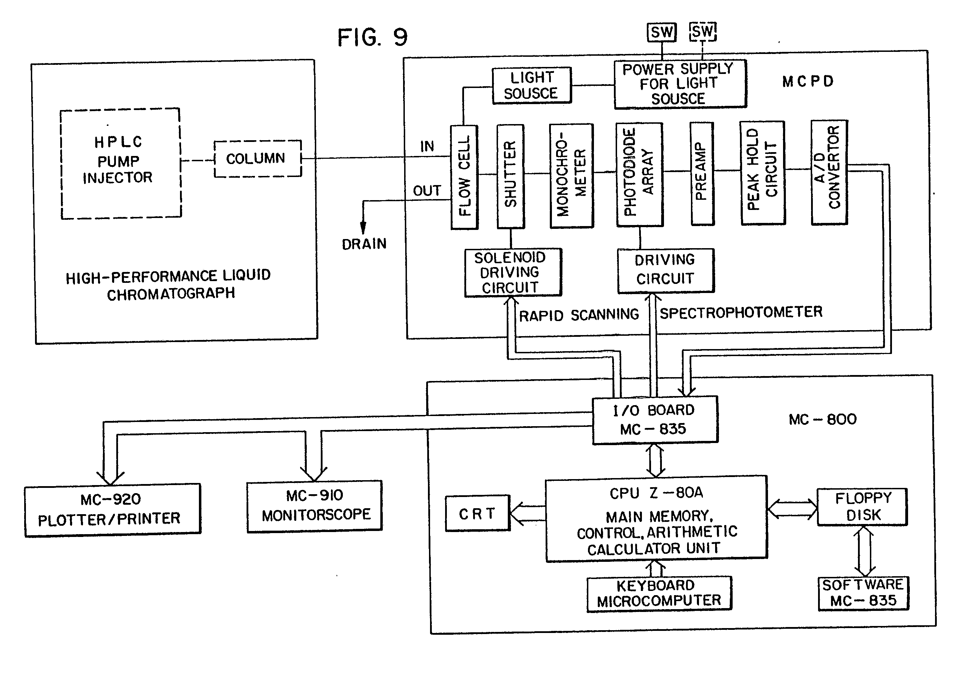

In the next step, each of the separated components is measured for the distribution curve of absorbance in the visible spectrum range by means of a rapid scanning spectro-photometer shown in Fig. 9. The distribution curve of absorbance per unit of content is constructed by plotting the quotient obtained by dividing the absorbance by the ratio of individual component to main component (hereinafter this quotient is referred to as absorbance coefficient). In Table 2 are shown absorbance coefficients, Dnλ, of each component thus obtained (wavelength interval is 20 nm).

## Table 1

| Component No. | Ratio of individual component to main component, % |
|:---:|:---:|
| 1 | 0.29 |
| 2 | 0.95 |
| 3 | 0.58 |
| 4 | 100.00 |
| 5 | 3.76 |
| 6 | 0.33 |
| 7 | 0.25 |
| 8 | 0.16 |
| 9 | 9.03 |
| 10 | 24.02 |
| 11 | 2.21 |
| 12 | 0.65 |
| 13 | 0.29 |
| 14 | 1.61 |

Table 2

| Component No. Wave-length nm | 1 | 2 | 3 | 4 | 5 |
|---|---|---|---|---|---|
| 400 | 0.0021 | 0.0036 | 0.0036 | 0.0016 | 0.0026 |
| 420 | 0.0024 | 0.0049 | 0.0052 | 0.0012 | 0.0020 |
| 440 | 0.0024 | 0.0073 | 0.0076 | 0.0020 | 0.0034 |
| 460 | 0.0034 | 0.0096 | 0.0093 | 0.0036 | 0.0060 |
| 480 | 0.0069 | 0.0118 | 0.0116 | 0.0065 | 0.0102 |
| 500 | 0.0100 | 0.0102 | 0.0098 | 0.0095 | 0.0143 |
| 520 | 0.0117 | 0.0065 | 0.0062 | 0.0095 | 0.0141 |
| 540 | 0.0114 | 0.0035 | 0.0031 | 0.0088 | 0.0128 |
| 560 | 0.0072 | 0.0009 | 0.0009 | 0.0029 | 0.0044. |
| 580 | 0.0028 | 0.0001 | 0.0005 | 0.0003 | 0.0005 |
| 600 | 0.0014 | 0.0001 | 0.0002 | 0.0001 | 0.0001 |
| 620 | 0.0007 | 0.0001 | 0.0000 | 0.0000 | 0.0000 |
| 640 | 0.0000 | 0.0001 | 0.0002 | 0.0000 | 0.0000 |
| 660 | 0.0003 | 0.0001 | 0.0003 | 0.0000 | 0.0000 |
| 680 | 0.0003 | 0.0002 | 0.0005 | 0.0000 | 0.0001 |
| 700 | 0.0003 | 0.0002 | 0.0005 | 0.0001 | 0.0002. |

– Cont'd –

Table 2 (Cont'd)

| Component No. / Wave-length nm | 6 | 7 | 8 | 9 | 10 |
|---|---|---|---|---|---|
| 400 | 0.0012 | 0.0044 | 0.0025 | 0.0024 | 0.0024 |
| 420 | 0.0009 | 0.0060 | 0.0013 | 0.0017 | 0.0018 |
| 440 | 0.0012 | 0.0092 | 0.0031 | 0.0030 | 0.0030 |
| 460 | 0.0015 | 0.0120 | 0.0056 | 0.0054 | 0.0053 |
| 480 | 0.0030 | 0.0168 | 0.0100 | 0.0093 | 0.0093 |
| 500 | 0.0061 | 0.0152 | 0.0144 | 0.0130 | 0.0133 |
| 520 | 0.0073 | 0.0104 | 0.0163 | 0.0128 | 0.0131 |
| 540 | 0.0070 | 0.0068 | 0.0150 | 0.0116 | 0.0121 |
| 560 | 0.0033 | 0.0028 | 0.0069 | 0.0037 | 0.0042 |
| 580 | 0.0006 | 0.0012 | 0.0019 | 0.0004 | 0.0005 |
| 600 | 0.0003 | 0.0004 | 0.0006 | 0.0001 | 0.0001 |
| 620 | 0.0003 | 0.0008 | 0.0013 | 0.0000 | 0.0000 |
| 640 | 0.0003 | 0.0008 | 0.0006 | 0.0000 | 0.0000 |
| 660 | 0.0003 | 0.0008 | 0.0006 | 0.0000 | 0.0000 |
| 680 | 0.0003 | 0.0012 | 0.0006 | 0.0000 | 0.0001 |
| 700 | 0.0006 | 0.0012 | 0.0013 | 0.0001 | 0.0001 |

– Cont'd –

Table 2 (Cont'd)

| Component No. / Wavelength nm | 11 | 12 | 13 | 14 |
|---|---|---|---|---|
| 400 | 0.0037 | 0.0034 | 0.0007 | 0.0022 |
| 420 | 0.0028 | 0.0040 | 0.0003 | 0.0016 |
| 440 | 0.0044 | 0.0060 | 0.0010 | 0.0025 |
| 460 | 0.0078 | 0.0089 | 0.0017 | 0.0045 |
| 480 | 0.0132 | 0.0134 | 0.0028 | 0.0078 |
| 500 | 0.0150 | 0.0162 | 0.0045 | 0.0111 |
| 520 | 0.0115 | 0.0146 | 0.0034 | 0.0111 |
| 540 | 0.0107 | 0.0122 | 0.0028 | 0.0102 |
| 560 | 0.0048 | 0.0045 | 0.0010 | 0.0035 |
| 580 | 0.0009 | 0.0006 | 0.0000 | 0.0004 |
| 600 | 0.0002 | 0.0003 | 0.0000 | 0.0001 |
| 620 | 0.0000 | 0.0002 | 0.0000 | 0.0000 |
| 640 | 0.0000 | 0.0002 | 0.0000 | 0.0001 |
| 660 | 0.0000 | 0.0003 | 0.0000 | 0.0001 |
| 680 | 0.0002 | 0.0006 | 0.0000 | 0.0002 |
| 700 | 0.0002 | 0.0003 | 0.0007 | 0.0003 |

In the liquid chromatogram shown in Fig. 6, the component No. 9 is an unfixed component and, hence, its dyeing coefficient $S_9$ is assumed to be zero, whereas those of other components to be 1.0.

The separation and quantitative determination of individual components of the standard dye and two or more representative samples are carried out under the same conditions of separation as described above. Using the ratio, $P_n$ (Table 3), of separated individual component to main component thus determined with respect to the standard dye and representative sample dye the mixing calculation is carried out according to the aforementioned formulas [1] to obtain the absorbances of mixtures (Table 4). The absorbance of the representative sample dye adjusted to the same optical density as that of the standard dye is obtained according to the formula [2] (Table 4).

The absorbance of the standard dye and that of the representative sample dye adjusted to the same optical density are then transformed into transmittances through the equation [6] (Table 5).

Table 3

| Standard dye | | Representative sample | |
|---|---|---|---|
| Compo-nent No. | Ratio to main component, % | Compo-nent No. | Ratio to main component, % |
| 1 | 0 | 1 | 0 |
| 2 | 0.19 | 2 | 1.47 |
| 3 | 0 | 3 | 0 |
| 4 | 100.00 | 4 | 100.00 |
| 5 | 2.03 | 5 | 3.78 |
| 6 | 0 | 6 | 0 |
| 7 | 0 | 7 | 0.13 |
| 8 | 0 | 8 | 0 |
| 9 | 5.10 | 9 | 4.78 |
| 10 | 14.38 | 10 | 14.04 |
| 11 | 1.04 | 11 | 0.81 |
| 12 | 0.30 | 12 | 0.48 |
| 13 | 0 | 13 | 0 |
| 14 | 0.52 | 14 | 0.53 |

Table 4

| Wavelength, nm | Sample | Absorbance of mixture of standard dye | Absorbance of mixture of representative sample | Adjusted absorbance of mixture of representative sample |
|---|---|---|---|---|
| 400 | | 0.2066 | 0.2154 | 0.2093 |
| 420 | | 0.1518 | 0.1618 | 0.1572 |
| 440 | | 0.2615 | 0.2770 | 0.2691 |
| 460 | | 0.4663 | 0.4886 | 0.4747 |
| 480 | | 0.8276 | 0.8590 | 0.8346 |
| 500 | | 1.2023 | 1.2375 | 1.2023 |
| 520 | | 1.1871 | 1.2170 | 1.1824 |
| 540 | | 1.0964 | 1.1199 | 1.0881 |
| 560 | | 0.3680 | 0.3756 | 0.3649 |
| 580 | | 0.0433 | 0.0442 | 0.0429 |
| 600 | | 0.0082 | 0.0086 | 0.0084 |
| 620 | | 0.0016 | 0.0019 | 0.0018 |
| 640 | | 0.0010 | 0.0013 | 0.0013 |
| 660 | | 0.0014 | 0.0018 | 0.0017 |
| 680 | | 0.0042 | 0.0048 | 0.0047 |
| 700 | | 0.0093 | 0.0100 | 0.0097 |

Table 5

| Sample / Wave-length, nm | Standard dye | Representative sample |
|---|---|---|
| 400 | 0.621 | 0.618 |
| 420 | 0.705 | 0.696 |
| 440 | 0.548 | 0.538 |
| 460 | 0.342 | 0.335 |
| 480 | 0.149 | 0.146 |
| 500 | 0.063 | 0.063 |
| 520 | 0.065 | 0.066 |
| 540 | 0.080 | 0.082 |
| 560 | 0.429 | 0.432 |
| 580 | 0.905 | 0.906 |
| 600 | 0.981 | 0.981 |
| 620 | 0.996 | 0.996 |
| 640 | 0.998 | 0.997 |
| 660 | 0.997 | 0.996 |
| 680 | 0.990 | 0.989 |
| 700 | 0.979 | 0.978 |

From the above values of transmittance and the formulae [7], complementary tristimulus values Z, Y, Z of the standard dye and the representative sample dye are calculated. The values obtained are
$X = 68.166$
$Y = 45.215$
$X = 45.460$
for the standard dye and
$X = 68.071$
$Y = 45.264$
$X = 44.724$
for the representative sample dye.

The coordinates are transformed through the equations [9] into a uniform color scale such as, for example, CIE 1976 (L*a*b*) colorimetric system recommended by CIE in 1976. The results obtained are
$L^* = 73.064$
$a^* = 64.137$
$b^* = 3.346$

14

for the standard dye and

L* = 73.096
a* = 63.790
b* = 4.216

for the representative sample dye.

The color difference of solution of the representative sample dye with respect to the standard dye is calculated by using the above colorimetric system and the formulae [10] to obtain the following results:

Hue difference = 0.89
Brightness difference = 0.30

The foregoing operation is repeated by selecting representative samples different from one another in proportions of coloring matter components.

### Measurement of Color Difference of Dyeings on Representative Sample

Dye solutions are prepared by dissolving in 50 parts of water 0.2 part of the same standard dye or 0.15 part (a quantity which gives a solution of the same depth of color as that of the standard dye and which is variable for each representative sample) of the same representative samples as used above. To each solution are added 0.5 part of "Duck algine NSPM" (a sodium alginate produced by Kamogawa Kasei Co.), 5 parts of sodium m-nitrobenzenesulfonate and 2 parts of sodium hydrogencarbonate to prepare a total of 100 parts of padding liquor. A piece of cotton cloth is allowed to absorb uniformly the liquor by dipping. After drying, the cloth is subjected to steaming in a steamer at 100°C for 5 minutes, then washing, soaping, and drying. The color difference of dyeings of representative samples against the dyeings of the standard dye is measured in terms of hue difference and brightness difference.

### Determination of Relationship between Color Difference of Dyeings and Color Difference of dye Solution with respect to Representative Sample

Using the data of color difference of dyeings and the color difference of solution obtained above, regression analysis is performed to determine the relationship in the form of regression line between the color difference of dye solution and the color difference of dyeings with respect to representative sample (Fig. 7).

### Measurement of Color Difference of Solution of Sample Dye

In a manner similar to that described previously, the color difference of solution of the sample dye is measured in terms of hue difference and brightness difference against the standard dye.

### Prediction of Color Difference of Dyeings with respect to Sample Dye

Using the color difference of solution of the sample dye obtained above, the predicted color difference of dyeings is obtained from the regression line. In Table 6 are shown both the predicted color difference thus obtained and the color difference obtained by actual dyeing with the sample dye.

## Table 6

| | | CIE 1976 L*a*b* colorimetric system | | |
| --- | --- | --- | --- | --- |
| | | Color difference of solution | Predicted color difference of dyeings | Result of dyeing |
| Sample No. 1 - 1 | Hue | 0.89 | 0.68 | 0.68 |
| | Brightness | 0.30 | 0.44 | 0.44 |

The values of predicted color difference of dyeings obtained on other sample dyes (1—2) to (1—6) are shown in Table 7 together with the results of dyeing in side-by-side arrangement.

15

## Table 7

| Sample No. | | CIE 1976 L*a*b* colorimetric system | | |
|---|---|---|---|---|
| | | Color difference of solution | Predicted color difference of dyeings | Result of dyeing |
| 1 - 2 | Hue | 0.07 | 0.06 | 0.05 |
| | Brightness | 0.02 | 0.03 | 0.03 |
| 1 - 3 | Hue | 0.34 | 0.27 | 0.27 |
| | Brightness | 0.11 | 0.16 | 0.15 |
| 1 - 4 | Hue | 0.03 | 0.03 | 0.04 |
| | Brightness | 0.01 | 0.01 | 0.01 |
| 1 - 5 | Hue | 0.39 | 0.30 | 0.30 |
| | Brightness | 0.43 | 0.63 | 0.63 |
| 1 - 6 | Hue | 0.05 | 0.05 | 0.05 |
| | Brightness | 0.02 | 0.03 | 0.04 |

As is seen from the above experimental results, the predicted values of color difference of dyeings obtained by the above method (predicted color difference of dyeings) show satisfactory agreement with the values obtained by actual dyeing (result of dyeing).

Example 2

Measurement of Color Difference of Representative Sample Solution

Color Index No. (C.I. No.) Disperse Blue 301 is separated into individual components by means of a high performance liquid chromatograph under the following conditions of separation. The dye solution for injection is prepared by dissolving 0.12 part of the dye in acetonitrile and making up to 100 parts with the same solvent.

Conditions for high performance liquid chromatographic separation:

Column: Lichrosorb $RP_{18}$ (Sumika Analytical Center Co.)

Mobile phase:

Liquid A: water

Liquid B: acetonitrile

Elution: Gradient method

The concentration of liquid B is increased from the starting concentration of 60% up to 70% after 20 minutes, then to 100% after subsequent 15 minutes.

Flow rate: 1 ml/minute.

Monitoring wavelength: 592 nm

Sample volume: 5 µl

The content of each component is determined by the method of peak area normalization and the ratio of each separated component to main component is calculated (Table 8).

In the next step, each of the separated components is measured for the distribution curve of absorbance in the visible spectrum range by means of a rapid scanning spectrophotometer shown in Fig. 9. The distribution curve of absorbance per unit of content is constructed by plotting the quotient obtained by dividing the absorbance by the ratio of individual component to main component (hereinafer this quotient

EP 0 144 113 B1

is referred to as absorbance coefficient). In Table 9 are shown absorbance coefficients, $D_nY$, of each component thus obtained (wavelength interval is 20 nm).

TABLE 8

| Component No. | Ratio of individual component to main component, % |
|---|---|
| 1 | 6.27 |
| 2 | 2.32 |
| 3 | 0.12 |
| 4 | 1.22 |
| 5 | 9.14 |
| 6 | 0.39 |
| 7 | 4.71 |
| 8 | 3.93 |
| 9 | 34.16 |
| 10 | 0.84 |
| 11 | 4.04 |
| 12 | 100.00 |
| 13 | 0.86 |

Table 9

| Component No. Wave-length nm | 1 | 2 | 3 | 4 | 5 |
|---|---|---|---|---|---|
| 400 | 0.0011 | 0.0021 | 0.0033 | 0.0016 | 0.0019 |
| 420 | 0.0011 | 0.0035 | 0.0042 | 0.0013 | 0.0022 |
| 440 | 0.0010 | 0.0047 | 0.0067 | 0.0014 | 0.0025 |
| 460 | 0.0009 | 0.0047 | 0.0075 | 0.0020 | 0.0030 |
| 480 | 0.0008 | 0.0035 | 0.0050 | 0.0043 | 0.0041 |
| 500 | 0.0008 | 0.0032 | 0.0025 | 0.0071 | 0.0059 |
| 520 | 0.0008 | 0.0048 | 0.0025 | 0.0111 | 0.0086 |
| 540 | 0.0008 | 0.0069 | 0.0025 | 0.0145 | 0.0110 |
| 560 | 0.0008 | 0.0106 | 0.0042 | 0.0181 | 0.0142 |
| 580 | 0.0008 | 0.0141 | 0.0042 | 0.0194 | 0.0161 |
| 600 | 0.0008 | 0.0144 | 0.0042 | 0.0180 | 0.0162 |
| 620 | 0.0007 | 0.0103 | 0.0033 | 0.0128 | 0.0142 |
| 640 | 0.0004 | 0.0048 | 0.0033 | 0.0062 | 0.0096 |
| 660 | 0.0003 | 0.0017 | 0.0025 | 0.0022 | 0.0045 |
| 680 | 0.0002 | 0.0006 | 0.0011 | 0.0021 | 0.0003 |
| 700 | 0.0001 | 0.0002 | 0.0003 | 0.0007 | 0.0003 |

- Cont'd -

Table 9 (Cont'd)

| Component No.<br>Wave-length nm | 6 | 7 | 8 | 9 | 10 |
|---|---|---|---|---|---|
| 400 | 0.0010 | 0.0019 | 0.0040 | 0.0020 | 0.0030 |
| 420 | 0.0015 | 0.0024 | 0.0068 | 0.0022 | 0.0035 |
| 440 | 0.0018 | 0.0032 | 0.0119 | 0.0023 | 0.0038 |
| 460 | 0.0031 | 0.0041 | 0.0161 | 0.0027 | 0.0044 |
| 480 | 0.0049 | 0.0061 | 0.0180 | 0.0037 | 0.0054 |
| 500 | 0.0067 | 0.0091 | 0.0162 | 0.0056 | 0.0071 |
| 520 | 0.0103 | 0.0125 | 0.0154 | 0.0084 | 0.0087 |
| 540 | 0.0118 | 0.0148 | 0.0152 | 0.0107 | 0.0095 |
| 560 | 0.0138 | 0.0164 | 0.0135 | 0.0132 | 0.0098 |
| 580 | 0.0131 | 0.0157 | 0.0099 | 0.0138 | 0.0087 |
| 600 | 0.0105 | 0.0135 | 0.0068 | 0.0127 | 0.0070 |
| 620 | 0.0067 | 0.0088 | 0.0031 | 0.0087 | 0.0046 |
| 640 | 0.0028 | 0.0043 | 0.0010 | 0.0040 | 0.0026 |
| 660 | 0.0005 | 0.0016 | 0.0003 | 0.0013 | 0.0010 |
| 680 | 0.0003 | 0.0007 | 0.0001 | 0.0005 | 0.0002 |
| 700 | 0.0003 | 0.0002 | 0.0001 | 0.0002 | 0.0001 |

- Cont'd -

Table 9 (Cont'd)

| Component No. Wave-length nm | 11 | 12 | 13 |
|---|---|---|---|
| 400 | 0.0032 | 0.0015 | 0.0003 |
| 420 | 0.0043 | 0.0017 | 0.0005 |
| 440 | 0.0059 | 0.0019 | 0.0007 |
| 460 | 0.0073 | 0.0023 | 0.0013 |
| 480 | 0.0091 | 0.0031 | 0.0019 |
| 500 | 0.0107 | 0.0044 | 0.0033 |
| 520 | 0.0118 | 0.0064 | 0.0047 |
| 540 | 0.0121 | 0.0083 | 0.0063 |
| 560 | 0.0116 | 0.0108 | 0.0078 |
| 580 | 0.0099 | 0.0121 | 0.0087 |
| 600 | 0.0081 | 0.0120 | 0.0087 |
| 620 | 0.0055 | 0.0100 | 0.0076 |
| 640 | 0.0003 | 0.0064 | 0.0051 |
| 660 | 0.0015 | 0.0029 | 0.0024 |
| 680 | 0.0008 | 0.0013 | 0.0010 |
| 700 | 0.0003 | 0.0004 | 0.0003 |

Into 300 parts of water, is added 0.2 part of the dye together with 10 parts of spun polyester yarn. The mixture is heated at 130°C under applied pressure for 60 minutes to effect dyeing. After dyeing, the yarn is washed with hot water, then subjected to reduction clearing and subsequent drying. In a customary manner, 1 part of the dyed yarn is extracted with 50 parts of chlorobenzene. Individual components contained in the extract are separated and quantitatively determined by liquid chromatography under the aforementioned conditions of separation to select the components fixed onto the yarn. In the liquid chromatogram shown in Fig. 8, the components No. 1, 2, 3 and 7 are unfixed components, so their dyeing coefficients $S_1$, $S_2$, $S_3$ and $S_7$, respectively, are assumed to be 0, whereas those of other components to be 1.0.

Separation and quantitative determination of individual components of the standard dye and two or more representative samples are carried out under the same conditions of separation as described above. Using the ratio, $P_n$ (Table 10), of separated individual component to main component thus determined with respect to the standard dye and representative sample dye, the mixing calculation is carried out according to the aforementioned formula [1] to determine the absorbance of mixture (Table 11).

## Table 10

| Standard dye | | Representative sample | |
|---|---|---|---|
| Component No. | Ratio to main component, % | Component No. | Ratio to main component, % |
| 1 | 0.14 | 1 | 0.14 |
| 2 | 0 | 2 | 0 |
| 3 | 0 | 3 | 0 |
| 4 | 0.04 | 4 | 0.04 |
| 5 | 2.29 | 5 | 2.10 |
| 6 | 0.07 | 6 | 0.08 |
| 7 | 0.13 | 7 | 0.12 |
| 8 | 0.09 | 8 | 0.12 |
| 9 | 1.83 | 9 | 1.90 |
| 10 | 0.14 | 10 | 0.18 |
| 11 | 0.04 | 11 | 0.04 |
| 12 | 100.00 | 12 | 100.00 |
| 13 | 0.11 | 13 | 0.05 |

Table 11

| Sample / Wave-length, nm | Absorbance of mixture of standard dye | Absorbance of mixture of representative sample | Adjusted absorbance of mixture of representative sample |
|---|---|---|---|
| 400 | 0.1557 | 0.1557 | 0.1559 |
| 420 | 0.1773 | 0.1774 | 0.1776 |
| 440 | 0.2050 | 0.2052 | 0.2054 |
| 460 | 0.2407 | 0.2409 | 0.2412 |
| 480 | 0.3254 | 0.3256 | 0.3259 |
| 500 | 0.4695 | 0.4694 | 0.4699 |
| 520 | 0.6841 | 0.6836 | 0.6843 |
| 540 | 0.8788 | 0.8780 | 0.8789 |
| 560 | 1.1401 | 1.1388 | 1.1400 |
| 580 | 1.2809 | 1.2790 | 1.2804 |
| 600 | 1.2635 | 1.2614 | 1.2627 |
| 620 | 1.0556 | 1.0534 | 1.0545 |
| 640 | 0.6687 | 0.6670 | 0.6677 |
| 660 | 0.3017 | 0.3008 | 0.3011 |
| 680 | 0.1387 | 0.1383 | 0.1384 |
| 700 | 0.0433 | 0.0432 | 0.0432 |

From the values of absorbance, the complementary tristimulus values X', Y', Z' of the standard dye and the representative sample dye are calculated according to the formulae [3], and the total complementary tristimulus values, SQ, are calculated according to the formula [4], to obtain the following results:

$X' = 86.75$
$Y' = 90.18$
$Z' = 26.37$
$SQ = 203.30$

for the standard dye and

$X' = 86.62$
$Y' = 90.07$
$Z' = 26.39$
$SQ = 203.08$

for the representative sample dye.

From the value of SQ and the formula [5], the absorbance of the representative sample dye adjusted to the same optical density as that of the standard dye is calculated (Table 11).

The absorbance of the standard dye and the absorbance of the representative sample dye adjusted to the same optical density are then transformed into transmittances through the equation [6] (Table 12).

## Table 12

| Wave-length, nm / Sample | Standard dye | Representative sample |
|---|---|---|
| 400 | 0.699 | 0.698 |
| 420 | 0.665 | 0.664 |
| 440 | 0.624 | 0.623 |
| 460 | 0.575 | 0.574 |
| 480 | 0.473 | 0.472 |
| 500 | 0.339 | 0.339 |
| 520 | 0.207 | 0.207 |
| 540 | 0.132 | 0.132 |
| 560 | 0.072 | 0.072 |
| 580 | 0.052 | 0.052 |
| 600 | 0.055 | 0.055 |
| 620 | 0.088 | 0.088 |
| 640 | 0.214 | 0.215 |
| 660 | 0.499 | 0.500 |
| 680 | 0.727 | 0.727 |
| 700 | 0.905 | 0.905 |

The tristimulus values, X, Y, Z, of the standard dye and the representative sample dye are calculated from the transmittance values according to the formulae [7] to obtain the following results:

$X = 18.963$
$Y = 17.110$
$Z = 61.976$

for the standard dye and

$X = 18.963$
$Y = 17.107$
$Z = 61.916$

for the representative sample dye.

The coordinates are transformed through the equations [9] into a uniform color scale such as, for example, CIE 1976 (L*a*b*) colorimetric system recommended by CIE in 1976. The results obtained are

L* = 48.420
a* = 14.810
b* = −55.470

for the standard dye and

L* = 48.417
a* = 14.827
b* = −55.422

for the representative sample dye.

The foregoing operation is repeated by selecting several representative samples different from one another in proportions of coloring matter components.

Measurement of Color Difference of Dyeings on Representative Sample

Dye solutions are prepared by dissolving in 300 parts of water 0.2 part of the same standard dye or 0.16 part (a quantity which gives a solution of the same depth of color as that of the standard dye and which is variable for each representative sample) of the same representative samples as used above. To each solution is added 10 parts of spun polyester yarn. The mixture is heated at 130°C under applied pressure for 60 minutes to effect dyeing. After dyeing, the yarn is washed with hot water and subjected to reduction clearing, washing with hot water, and drying. The color difference of dyeings of representative samples against the dyeings of the standard dye is measured in terms of hue difference and brightness difference.

Determination of Relationship between Color Difference of Dyeings and
Color Difference of Dye Solutions with respect to Representative Sample

Using the data of color difference of dyeings and the color difference of solution obtained above, regression analysis is performed to determine the relationship in the form of regression line between the color difference of dye solution and the color difference of dyeings with respect to representative samples. there are obtained the following relationships:

Hue difference of dyeings = 1.35 × (hue difference of solution)
Brightness difference of dyeings = −0.98 × (brightness difference of solution) + 0.22

Measurement of Color Difference of Solution of Sample Dye

In a manner similar to that described previously, the color difference of solution of the sample dye is measured in terms of hue difference and brightness difference against the standard dye.

Prediction of Color Difference of Dyeings with respect to Sample Dye

Using the color difference of solution of the sample dye obtained above, the predicted color difference of dyeings is obtained from the regression line. In Table 13 are shown both the predicted color difference thus obtained and the color diifference obtained by actual dyeing with the sample dye.

## Table 13

|  |  |  | CIE 1976 L*a*b* colorimetric system | | |
|---|---|---|---|---|---|
|  |  |  | Color difference of solution | Predicted color difference of dyeings | Result of dyeing |
| Sample No. 2 − 1 | Hue |  | 0.03 | 0.04 | 0.04 |
|  | Brightness |  | 0.04 | 0.18 | 0.18 |

The values of predicted color difference of dyeings obtained on other sample dyes (2—2 to 2—7) are shown in Table 14 together with the results of dyeing in side-by-side arrangement.

## Table 14

| Sample No. | | CIE 1976 L*a*b* colorimetric system | | |
| --- | --- | --- | --- | --- |
| | | Color difference of solution | Predicted color difference of dyeings | Result of dyeing |
| 2 - 2 | Hue | 0.09 | 0.12 | 0.12 |
| | Brightness | 0.20 | 0.02 | 0.03 |
| 2 - 3 | Hue | 0.06 | 0.08 | 0.08 |
| | Brightness | 0.09 | 0.13 | 0.10 |
| 2 - 4 | Hue | 0.06 | 0.08 | 0.09 |
| | Brightness | 0.03 | 0.19 | 0.20 |
| 2 - 5 | Hue | 0.05 | 0.07 | 0.07 |
| | Brightness | 0.03 | 0.19 | 0.19 |
| 2 - 6 | Hue | 0.01 | 0.02 | 0.01 |
| | Brightness | 0.09 | 0.13 | 0.12 |
| 2 - 7 | Hue | 0.01 | 0.02 | 0.02 |
| | Brightness | 0.05 | 0.17 | 0.16 |

As is seen from the above experimental results, the predicted values of color difference of dyeings obtained by the above method (predicted color difference of dyeings) show satisfactory agreement with the values obtained by actual dyeing (result of dyeing).

Example 3
Measurement of Color Difference of Representative Sample Solution

Color Index No. (C.I. No.) Disperse Blue 139, one of the disperse dyes sparingly soluble or insoluble in water, is used. A dye solution prepared by dissolving 0.005 part of the standard dye or a representative sample in 80% acetonitrile and making up to 100 parts is measured for the distribution curve of absorbance in the visible spectrum range by means of a common spectrophotometer.

In the next steps, the above distribution curve is converted by means of the formula [2] so that the optical density of the representative sample may become identical with that of the standard dye. Alternatively, the conversion is also possible by calculating the complementary tristimulus values X', Y', Z' by means of the formulae [3], then calculating the total complementary tristimulus values, SQ, by means of the formula [4], and converting the absorbance curve of the representative sample dye by using the value of SQ and the formula [5] so that the optical density of the representative sample may become identical with that of the standard dye.

The absorbance of the standard dye and the converted absorbance of the representative sample dye are transformed through formulae [6] into transmittance and the tristimulus values X, H, Z are calculated according to the formulas [7]. The calculated values are

$X = 12.870$
$Y = 7.500$
$Z = 31.964$

25

for the standard dye and

$X = 12.993$
$Y = 7.514$
$Z = 31.579$

for the representative sample dye.

The coordinates are then transformed through the formulae [9] into a uniform color scale such as CIE 1976 (L*a*b*) colorimetric system recommended by CIE in 1976. These values are

$L* = 32.936$
$a* = 46.094$
$b* = -49.182$

for the standard dye and

$L* = 32.966$
$a* = 46.779$
$b* = -48.591$

for the representative sample dye. The color difference of solution of the representative sample dye relative to the standard dye is derived from the above colorimetric system and the formulae [10] to obtain the following results:

Hue difference = 0.90
Brightness difference = 0.05

The foregoing operation is repeated on several representative sample different from one another in proportions of coloring matter components.

### Measurement of Color Difference of Dyeings on Representative Sample

Dye solutions are prepared by dissolving in 300 parts of water 0.2 part of the standard dye or 0.16 part (a quantity which gives a solution of the same depth of color as that of the standard dye and which is variable for each representative sample) of the same representative sample as used above. To each solution is added 10 parts of spun polyester yarn. The mixture is heated at 130°C under applied pressure for 60 minutes to effect dyeing. After dyeing, the yarn is washed with hot water and subjected to reduction clearing, washing with hot water, and drying. The color difference of dyeings of the representative sample dye relative to the dyeings of the standard dye is measured in terms of hue difference and brightness difference.

### Determination of Relationship between Color Difference of Dyeings and Color Difference of Dye Solution with respect to Representative Sample

Using the data of color difference of dyeings and the color difference of solution obtained above, regression analysis is performed to determine the relationship in the form of a regression line between the color difference of dye solution and the color difference of dyeings with respect to representative samples. There are obtained the following relationships:

Hue difference of dyeings = 0.13 × (hue difference of solution)
Brightness difference of dyeings = −1.8 × brightness difference of solution) + 0.28

### Measurement of Color Difference of Solution of Sample Dye

In a manner similar to that described previously, the color difference of solution of the sample dye is measured in terms of hue difference and brightness difference against the standard dye.

### Prediction of Color Difference of Dyeings with respect to Sample Dye

Using the color difference of solution of the sample dye obtained above, the predicted color difference of dyeings is obtained from the regression line. In Table 15 are shown both the predicted color difference thus obtained and the color difference obtained by actual dyeing with the sample dye.

## Table 15

| | | CIE 1976 L*a*b* colorimetric system | | |
| | | Color difference of solution | Predicted color difference of dyeings | Result of dyeing |
|---|---|---|---|---|
| Sample No. 3 - 1 | Hue | 0.90 | 0.12 | 0.12 |
| | Brightness | 0.05 | 0.19 | 0.19 |

The values of predicted color difference of dyeings obtained on other samples (3—2 to 3—9) are shown in Table 16 together with the results of dyeing in side-by-side arrangement.

Table 16

| Sample No. | | CIE 1976 L*a*b* colorimetric system | | |
| --- | --- | --- | --- | --- |
| | | Color dif-ference of solution | Predicted color difference of dyeings | Result of dyeing |
| 3-2 | Hue | 0.67 | 0.09 | 0.07 |
| | Brightness | 0.04 | 0.21 | 0.22 |
| 3-3 | Hue | 0.73 | 0.09 | 0.08 |
| | Brightness | 0.05 | 0.19 | 0.19 |
| 3-4 | Hue | 0.93 | 0.12 | 0.12 |
| | Brightness | 0.08 | 0.14 | 0.14 |
| 3-5 | Hue | 0.09 | 0.01 | 0.01 |
| | Brightness | 0.02 | 0.24 | 0.25 |
| 3-6 | Hue | 0.39 | 0.05 | 0.04 |
| | Brightness | 0.01 | 0.26 | 0.26 |
| 3-7 | Hue | 0.83 | 0.11 | 0.10 |
| | Brightness | 0.01 | 0.26 | 0.26 |
| 3-8 | Hue | 0.94 | 0.12 | 0.12 |
| | Brightness | 0.06 | 0.17 | 0.16 |
| 3-9 | Hue | 0.71 | 0.09 | 0.08 |
| | Brightness | 0.03 | 0.23 | 0.22 |

As is seen from the above experimental results, the predicted values of color difference of dyeings obtained by the above method (predicted color difference of dyeings) show satisfactory agreement with the values obtained by actual dyeing (result of dyeing).

**Claims**

1. A method for measuring the colour difference between a sample dye and a standard dye by testing the colour properties of both dyes, which comprises:
(a) measuring the distribution curve of absorbance of each component of the dye by separating each of the components contained in the standard dye and in representative samples of the dye by chromatography, determining the content of each separated component by quantitative analysis,

27

measuring a distribution curve of absorbance for each component separated, and calculating a distribution curve of absorbance per unit content for each component separated;

(b) deriving a relationship between colour differences of dye solutions and colour differences of dyeings made with the standard dye and the representative samples by using the previously determined distribution curves of absorbance per unit content of the separated components and the contents determined by quantitative analysis of each separated component with respect to the standard dye and the representative samples, thereby to obtain the distribution curves of absorbance of a mixture with respect to the standard dye and the representative samples, setting the said distribution curves of absorbance of the representative samples obtained to concide with that of the standard dye using optical density ratios between the standard dye and the representative samples, transforming the said distribution curve of absorbance of the standard dye obtained and the said coincident distribution curve of absorbance of the representative samples into transmittance curves to obtain tristimulus values X, Y, Z for both the standard dye and the representative samples, transforming the tristimulus values into a uniform colour scale colorimetric system and determining hue and saturation or brightness difference between the standard dye and representative samples in that colorimetric system, determining the colour difference between dyeings prepared with the standard dye and the representative samples in terms of hue and saturation or brightness, and deriving the relationship between the previously determined colour differences of the dye solution and the previously determined colour differences of the dyeings in terms of hue and saturation or brightness;

(c) calculating the colour differences between standard dye and solutions of the sample dye in terms of hue and saturation or brightness, as previously described; and

(d) predicting the colour differences of dyeings of the sample dye from the colour differences of the solution of the sample dye previously determined using the relationship derived above.

2. A method according to claim 1, wherein high performance liquid chromatography is used as the means to separate the individual components contained in the dye.

3. A method according to claim 1, wherein a distribution curve of absorbance is corrected by a weighting factor.

**Patentansprüche**

1. Verfahren zum Messen des Farbunterschiedes zwischen einer Farbstoffprobe und einem Standardfarbstoff durch Testen der Farbeigenschaften beider Farbstoffe mit folgenden Schritten:

(a) Messen der Absorptionsverteilungskurve jeder Komponente des Farbstoffes durch Separieren jeder der Komponenten, die in dem Standardfarbstoff und in den repräsentativen Farbstoffproben enthalten sind, mittels Chromatographie, Bestimmen des Gehalts jeder separierten Komponente mittels quantitativer Analyse, Messen einer Absorptionsverteilungskurve für jede separierte Komponente und Berechnen der Absorptionsverteilungskurve pro Einheitsgehalt für jede separierte Komponente;

(b) Ableiten eines Verhältnisses zwischen den Farbunterschieden von Farbstofflösungen und den Farbunterschieden von Färbungsmitteln, die mittels des Standardfarbstoffes und der repräsentativen Proben hergestellt werden, durch Verwenden der vorher bestimmten Absorptionsverteilungskurve pro Einheitsgehalt der separierten Komponenten und der Gehalte, die durch quantitative Analyse jeder separierten Komponente in Bezug auf den Standardfarbstoff und die repräsentativen Proben bestimmt wurden, um so die Absorptionsverteilungskurve einer Mischung in Bezug auf den Standardfarbstoff und die repräsentativen Proben zu erhalten, durch Einstellen der Koinzidenz der erhaltenen Absorptionsverteilungskurve der repräsentativen Proben mit der des Standardfarbstoffes mittels des optische Dichteverhältnisses zwischen dem Standardfarbstoff und den repräsentativen Proben, durch Transformieren der erhaltenen Absorptionsverteilungskurve des Standardfarbstoffes und der koinzidenten Absorptionsverteilungskurve der repräsentativen Probe in Transmissionskurven, um die Farbwerte X, Y, Z für sowohl den Standardfarbton als auch die repräsentativen Proben zu erhalten, durch Transformieren der Farbwerte in ein colorimetrisches System mit einheitlicher Farbskala und Bestimmen des Farbton-, Sättigungs- oder Helligkeitsunterschiedes zwischen dem Standardfarbstoff und den repräsentativen Proben in dem colorimetrischen System, durch Bestimmen des Farbunterschiedes zwischen Färbemitteln, die mit dem Standardfarbstoff und den repräsentativen Proben präpariert wurden, hinsichtlich des Farbtons, der Sättigung oder der Helligkeit und durch Ableiten des Verhältnisses zwischen den vorher bestimmten Farbunterschieden der Farbstofflösung und den vorher bestimmten Farbunterschieden der Färbungsmittel hinsichtlich des Farbtons, der Sättigung oder der Helligkeit;

(c) Berechnen der Farbunterschiede zwischen dem Standardfarbstoff und Lösungen der Farbstoffprobe hinsichtlich des Farbtons, der Sättigung oder der Helligkeit, wie vorher beschrieben; und

(d) Vorhersage der Farbunterschiede von Färbungsmitteln der Farbstoffprobe aus den Farbunterschieden der Farbstoffprobenlösungen, die vorher mittels des oben abgeleiteten Verhältnisses bestimmt wurden.

2. Verfahren nach Anspruch 1, wobei zum Separieren der im Farbstoff enthaltenen einzelnen Komponenten hochauflösende Flüssigkeitschromatographie verwandt wird.

3. Verfahren nach Anspruch 1, wobei eine Absorptionsverteilungskurve durch einen Gewichtsfaktor korrigiert wird.

**Revendications**

1. Procédé de détermination de la différence de coloration entre un colorant à mesurer et un colorant standard, par la mesure des propriétés colorates des deux colorants, selon lequel:

(a) on établit la courbe de répartition de l'absorbance de chaque composant du colorant en séparant par chromatographie chacun des composants contenus dans le colorant standard et dans des échantillons représentatifs du colorant, en déterminant par analyse quantitative la teneur en chaque composant séparé, en établissant la courbe de répartition de l'absorbance de chaque composant séparé, et on calcule pour chaque composant séparé la courbe de répartition de l'absorbance de chaque composant séparé, et on calcule pour chaque composant séparé la courbe de répartition de l'absorbance par unité de teneur;

(b) on établit une relation entre les différences de coloration de solutions du colorant et les différences de coloration de teintures faites avec le colorant standard et les échantillons représentatifs en se servant des courbes de répartition de l'absorbance par unité de teneur, déterminées précédemment pour les composants séparés, et des teneurs de chaque composant séparé, déterminées pour le colorant standard et les échantillons représentatifs, ce pa quoi on obtient les courbes de répartition de l'absorbance d'un mélange pour le colorant standard et les échantillons représentatifs, on fait coïncider lesdites courbes obtenues de répartition de l'absorbance des échantillons représentatifs avec celle du colorant standard en se servant des rapports de la densité optique entre le colorant standard et les échantillons représentatifs, on convertit en courbes de coefficient de transmission ladite courbe obtenue de répartition de l'absorbance du colorant standard et ladite courbe coïncidente de répartition de l'absorbance des échantillons représentatifs pour obtenir les valeurs de tristimulus X, Y, Z pour le colorant standard et pour les échantillons représentatifs, on convertit les valeurs de tristimulus en un système uniforme d'échelle de colorations et on détermine, dans ce système colorimétrique, la différence de nuance et de saturation ou de brillance entre le colorant standard et les échantillons représentatifs, on exprime, en termes de nuance et de saturation ou de brillance, la différence de coloration entre des teintures préparées avec le colorant standard et les échantillons représentatifs, et on établit, en termes de nuance et de saturation ou de brillance, la relation entre les différences de coloration, déterminées précédemment, de la solution de colorant et les différences de coloration des teintures, déterminées précédemment;

(c) on calcule comme décrit ci-dessus, en termes de nuance et de saturation ou de brillance, les différences de coloration entre le colorant standard et les solutions du colorant standard; et

(d) on prévoit les différences de coloration de teintures du colorant standard à partir des différences de coloration de la solution du colorant standard, déterminées ci-dessus en se servant de la relation établie ci-dessus.

2. procédé selon la revendication 1, dans lequel en utilise la chromatographie liquide à haute performance comme moyen de séparation des composants individuels contenus dans le colorant.

3. Procédé selon la revendication 1, dans lequel la courbe de répartition de l'absorbance est corrigée par un facteur pondéral.

# FIG. I

(PREPARATORY STAGE)

(MEASURING STAGE)

## FIG. 2

**(1)**

```
┌─────────────────────┐
│  DYE OF THE SAME    │
│      FAMILY         │
└─────────────────────┘
          │
          ▼
┌─────────────────────┐
│  SEPARATION AND     │
│    COLLECTION       │
└─────────────────────┘
          │
          ▼
┌─────────────────────┐
│  DISTRIBUTION CURVE │
│  OF ABSORBANCE OF   │
│ SEPARATED COMPONENT │
└─────────────────────┘
      ※1  │
          ▼
┌─────────────────────┐
│   WEIGHTING FOR     │
│     DYEABILITY      │
└─────────────────────┘
          │
          ▼
┌─────────────────────┐
│ DISTRIBUTION CURVE  │
│ OF ABSORBANCE PER   │
│ UNIT OF CONTENT     │
│ OF SEPARATED        │
│ COMPONENT CONTENT   │
└─────────────────────┘
```

(center column)

```
┌─────────────────────┐
│   STANDARD DYE      │
└─────────────────────┘
          │
          ▼
┌─────────────────────┐
│ QUANTITATIVE DETER- │
│ MINATION OF SEPAR-  │
│  ATED COMPONENT     │
└─────────────────────┘
      ※1  │
          ▼
┌─────────────────────┐
│   WEIGHTING FOR     │
│     DYEABILITY      │
└─────────────────────┘
          │
          ▼
┌─────────────────────┐
│  COLOR MIXING OF    │
│ DYEABLE COMPONENTS  │
└─────────────────────┘
          │
          ▼
┌─────────────────────┐
│ DISTRIBUTION CURVE  │
│   OF ABSORBANCE     │
└─────────────────────┘
          │
          ▼
┌─────────────────────┐
│ TRANSFORMATION INTO │
│ DISTRIBUTION CURVE  │
│  OF TRANSMITTANCE   │
└─────────────────────┘
          │
          ▼
┌─────────────────────┐
│    CALCULATION      │
│  OF TRISTIMULUS     │
│   VALUES X, Y, Z    │
└─────────────────────┘
          │
          ▼
┌─────────────────────┐
│   CALCULATION OF    │
│     L* a* b*        │
└─────────────────────┘
          │
          ▼
┌─────────────────────┐
│   CALCULATION OF    │
│  COLOR DIFFERENCE   │
└─────────────────────┘
          │
          ▼
┌─────────────────────┐
│  COLOR DIFFERENCE   │
│    OF SOLUTION      │
└─────────────────────┘
```

**(2)**

```
┌─────────────────────┐
│   REPRESENTATIVE    │
│   SAMPLE DYES OR    │
│    SAMPLE DYE       │
└─────────────────────┘
          │
          ▼
┌─────────────────────┐
│ QUANTITATIVE DETER- │
│ MINATION OF SEPAR-  │
│  ATED COMPONENT     │
└─────────────────────┘
      ※1  │
          ▼
┌─────────────────────┐
│   WEIGHTING FOR     │
│     DYEABILITY      │
└─────────────────────┘
          │
          ▼
┌─────────────────────┐
│  COLOR MIXING OF    │
│ DYEABLE COMPONENTS  │
└─────────────────────┘
          │
          ▼
┌─────────────────────┐
│ DISTRIBUTION CURVE  │
│   OF ABSORBANCE     │
└─────────────────────┘
          │
          ▼
┌─────────────────────┐
│   ADJUSTMENT FOR    │
│   OPTICAL DENSITY   │
└─────────────────────┘
          │
          ▼
┌─────────────────────┐
│ TRANSFORMATION INTO │
│ DISTRIBUTION CURVE  │
│  OF TRANSMITTANCE   │
└─────────────────────┘
          │
          ▼
┌─────────────────────┐
│    CALCULATION      │
│  OF TRISTIMULUS     │
│   VALUES X, Y, Z    │
└─────────────────────┘
          │
          ▼
┌─────────────────────┐
│   CALCULATION OF    │
│     L* a* b*        │
└─────────────────────┘
```

※1
WEIGHTING FOR DYEABILITY IS APPLIED EITHER IN (1) OR (2)

FIG. 3

FIG. 4

## FIG. 5

## FIG. 6

4

FIG. 7

COLOR DIFFERENCE OF DYEINGS
(IN CIE COLOR DIFFERENCE UNIT)

REGRESSION LINE
RELATING TO
BRIGHTNESS
DIFFERENCE

REGRESSION LINE RELATING
TO HUE DIFFERENCE

0.5
0.4
0.3
0.2
0.1

0.1    0.2    0.3    0.4    0.5

COLOR DIFFERENCE OF SOLUTION
(IN CIE COLOR DIFFERENCE UNIT)

FIG. 8

5

# FIG. 9

EP 0 144 113 B1